# EUROPEAN PATENT SPECIFICATION

(11) **EP 3 860 166 B1**
(45) Date of publication and mention of the grant of the patent: **04.09.2024**
(21) Application number: 19864906.3
(22) Date of filing: 26.09.2019
(51) Int. Cl.: H04W 4/12, H04L 65/1033, H04L 65/1069, H04L 67/55, H04L 67/561, H04L 69/22, H04M 3/42, H04M 3/533, H04M 7/00, H04W 4/50, H04W 8/26

(54) **MESSAGE SENDING METHOD AND DEVICE, AND COMPUTER-READABLE STORAGE MEDIUM**
VERFAHREN UND VORRICHTUNG ZUM SENDEN VON NACHRICHTEN UND COMPUTERLESBARES SPEICHERMEDIUM
PROCÉDÉ ET DISPOSITIF D'ENVOI DE MESSAGES, ET SUPPORT DE STOCKAGE LISIBLE PAR ORDINATEUR

(30) Priority: 30.09.2018 CN 201811160187
(43) Date of publication of application: 04.08.2021
(73) Proprietor: Nanjing Zhongxing Software Company Limited., Jiangsu 210012 (CN)
(72) Inventor: WANG, Guocai, Nanjing, Jiangsu 210012 (CN); XU, Ying, Nanjing, Jiangsu 210012 (CN); HE, Kerong, Nanjing, Jiangsu 210012 (CN)
(74) Representative: Aipex B.V.
(86) International application number: PCT/CN2019/108065
(87) International publication number: WO 2020/063725

(56) References cited:
- CN-A- 1 829 262
- CN-A- 101 651 936
- CN-A- 101 873 554
- CN-A- 103 200 537
- CN-A- 104 284 370
- US-A1- 2006 142 029
- US-A1- 2008 037 534

## Description

### TECHNICAL FIELD

The present disclosure relates to communication technologies and, in particular, a message sending method and device, and a computer-readable storage medium.

### BACKGROUND

In a scenario of a specific communication service, for example, after party A communicates with party B, party B is expected to automatically reply to party A with a message edited by party B in advance. However, under current networking conditions, a carrier for implementing this function is usually a service provider (SP). Thus, a sender of the replied message received by party A is displayed as an access number of the SP, a multimedia message service center identity (MMSCID) or other number information, instead of number information about party B. To implement the function of displaying the sender of a message, which is replied to party B, as number information about party A, party A needs to manually edit and send the message. For example, after a customer calls a shopkeeper, the shopkeeper expects to reply to the customer with a multimedia message whose sender is displayed as a mobile phone number of the shopkeeper. Currently, the preceding function can only be implemented by manually editing. Additionally, not only in the field of multimedia message services, but also in application scenarios such as voice and short messages of the voice message service (VMS), there is no corresponding solutions and devices that can implement both the function of automatically editing a message and sending the message to a calling party, and the function of displaying a number of a called party after hanging up.

Further relevant technologies are also known from US 20060142029A1 which relates to a wireless network system for efficiently delivering multimedia messages, CN 103200537 A which relates to a method, system and server for carrying out number conversion on multimedia message service, and US 8412846 B2 which relates to a wireless network system for efficiently delivering multimedia messages.

### SUMMARY

To solve the technical problem described above, embodiments of the present disclosure provide a message sending method and device, and a computer-readable storage medium.

The invention is set out in the appended set of claims.

### BRIEF DESCRIPTION OF DRAWINGS

The drawings generally illustrate various embodiments discussed herein by way of examples rather than limitations.
FIG. 1 is a flowchart of a message sending method according to an embodiment of the present disclosure;
FIG. 2 is a flowchart of a message sending service according to an embodiment of the present disclosure;
FIG. 3 is a flowchart of a message sending method according to an embodiment of the present disclosure;
FIG. 4 is a structural diagram of a message sending device according to an embodiment of the present disclosure;
FIG. 5 is a structural diagram of a message sending device according to an embodiment of the present disclosure;
FIG. 6 is a structural diagram of a gateway device according to an embodiment of the present disclosure; and
FIG. 7 is a structural diagram of a message sending device according to an embodiment of the present disclosure.

### DETAILED DESCRIPTION

To provide a more detailed understanding of features and technical content of embodiments of the present disclosure, an implementation of the embodiments of the present disclosure is described below in detail in conjunction with the drawings. The drawings are merely provided for reference and are not intended to limit the embodiments of the present disclosure.

A sent message in the embodiments of the present disclosure may be a multimedia message, a short message, a VMS voice and other information. A description is given below in detail by using an example where the sent message is the multimedia message. A newly added network element may be selected as a performing body of the message sending method in an embodiment of the present disclosure. Specifically, the newly added network element may be a multimedia message platform, which may be composed of a simulated UA module and a simulated gateway general packet radio service (GPRS) support node (GGSN) module, hereinafter referred to as a UA module and a RAD_C module, respectively.

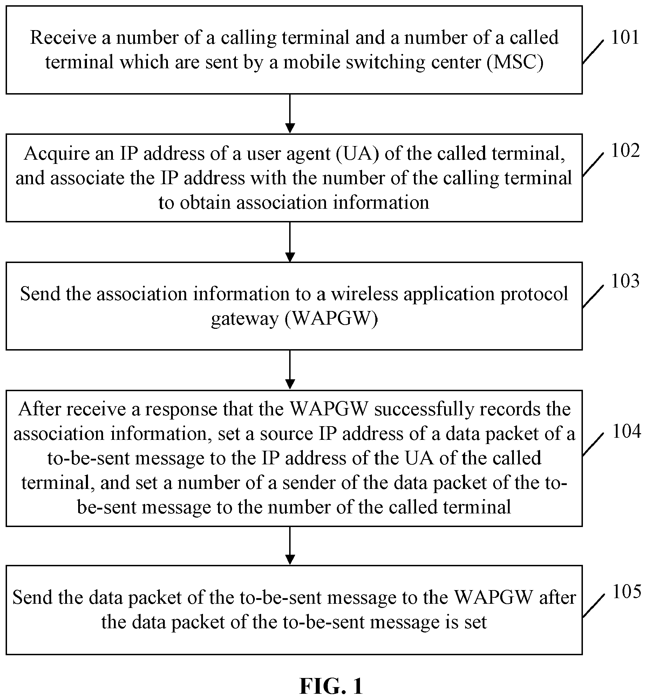

FIG. 1 is a flowchart of a message sending method according to an embodiment of the present disclosure. As shown in FIG. 1, the message sending method includes the steps described below.

In step 101, a number of a calling terminal and a number of a called terminal which are sent by a mobile switching center (MSC) are received.

When the called terminal opens the multimedia message service, service opening information is synchronized to the MSC. When the called terminal completes a call and hangs up, the RAD_C module of the multimedia message platform simulates the function of the GGSN, and the number of the called terminal and the number of the calling terminal pushed by the MSC are received. The number of the calling terminal is set to a receiver of a multimedia message, and the number of the called terminal is set to a sender of the multimedia message. Communications between the RAD_C module and an interface of the MSC network element may be performed by using a user datagram protocol (UDP).

In step 102, an IP address of a user agent (UA) of the called terminal is acquired, and the IP address is associated with the number of the calling terminal to obtain association information.

A correspondence between the IP address of the UA of the called terminal and the number of the calling terminal is established to obtain the association information. In an embodiment, an IP address of the UA module of the multimedia message platform is set to an IP address of the called terminal.

In step 103, the association information is sent to a wireless application protocol gateway (WAPGW).

The RAD_C module of the multimedia message platform simulates the function of the GGSN, online information is requested from the WAPGW. The correspondence after the acquired IP address of the UA is associated with the number of the calling terminal is sent in a form of an ACCOUNTING_REQ (START) message to the WAPGW via a remote authentication dial-in user server (RADIUS) interface configured on the RAD_C module.

In step 104, after a response that the WAPGW successfully records the association information is received, a source IP address of a data packet of a to-be-sent message is set to the IP address of the UA of the called terminal, and a number of a sender of the data packet of the to-be-sent message is set to the number of the called terminal.

After receiving an RADIUS message that includes the correspondence and is sent by the RAD_C module of the multimedia message platform, the WAPGW records the correspondence, and replies an ACCOUNTING_RES response message to the RAD_C module of the multimedia message platform to inform the RAD_C module of the successful reception. After the multimedia message platform receives the response, an edited message is encapsulated into a data packet. The message here includes the multimedia message content edited by a user in advance. A source IP address of the data packet is set to the IP address of the UA of the called terminal. In an embodiment, the IP address of the module that is in the multimedia message platform and responsible for sending the multimedia message, that is, the IP address of the UA module of the multimedia message platform, may be selected as the IP address of the UA of the called terminal, which is consistent with the IP address of the UA contained in the ACCOUNTING_REQ (START) message in step 103. Additionally, a number of a sender of the data packet is set to the number of the called terminal.

In step 105, the data packet of the to-be-sent message is sent to the WAPGW after the data packet of the to-be-sent message is set.

The UA module of the multimedia message platform sends the data packet of the to-be-sent message to the WAPGW. Here, the multimedia message platform may be deployed on the same IP bearer network as the WAPGW and establish a network link with the WAPGW in the manner of a generic route encapsulation (GRE) tunnel. And a standard hyper text transfer protocol (HTTP) request may be used over the interface of the UA module. A source address of the request is the IP address for sending the multimedia message, which is set to the IP address of the UA of the called terminal. A destination address and a port of the data packet request are set to an address and a port of an M1 interface of the multimedia message service center (MMSC). An X-UP-CALLING-LINE-ID field in an HTTP packet header is filled in with the calling number, and this function is implemented by the WAPGW. In an embodiment, after the WAPGW receives the data packet, the WAPGW inquires the calling number corresponding to the IP address of the UA of the called terminal according to the previously recorded correspondence information, and the calling number is filled into the X-UP-CALLING-LINE-ID field and used as the receiver of the multimedia message; after the data packet is set, the data packet is sent to the multimedia message service center (MMSC) where the calling terminal is located, and the MMSC sends the data packet of the message to the calling terminal.

In an embodiment of the present disclosure, after a response that the data packet of the to-be-sent message is successfully submitted is received, where the response is from the multimedia message service center (MMSC) and sent by the WAPGW, the WAPGW is notified to delete the correspondence information between the IP address of the UA of the called terminal and the number of the calling terminal. In an embodiment, when the MMSC successfully receives the data packet of the to-be-sent message, the response of the successful submission is replied to the multimedia message platform via the WAPGW. After the response is received, the RAD_C module of the multimedia message platform sends an RADIUS message to the WAPGW to notify the WAPGW that the user goes offline, so as to release the correspondence between the IP address and the number previously recorded by the WAPGW; after the WAPGW receives the RADIUS offline message, the correspondence is deleted, and a success response is replied to the multimedia message platform.

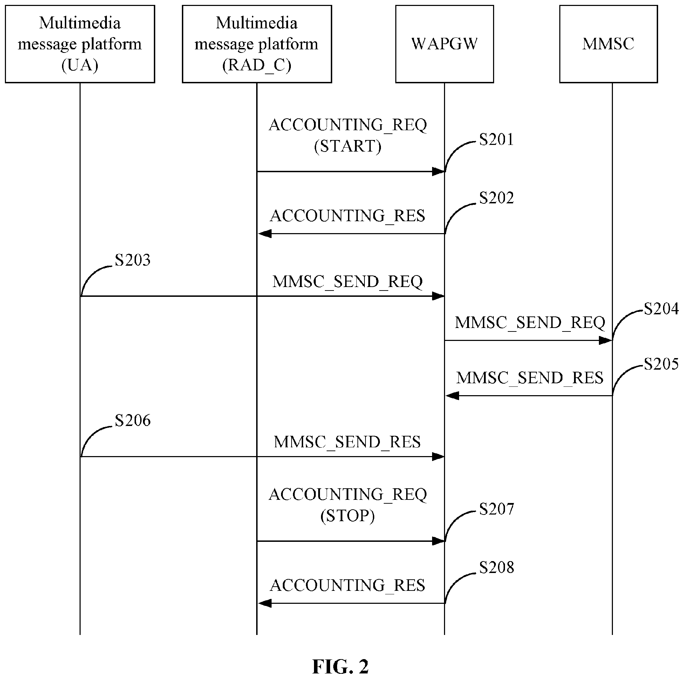

The service process of sending a message described above may be implemented with reference to FIG. 2. As shown in FIG. 2, the service process includes steps S201 to S208. In step S201, the RAD_C module of the multimedia message platform simulates the function of the GGSN; before the UA module sends a multimedia message, calling number information and called number information pushed by the MSC are received, which are explicit about a receiver and a sender of the multimedia message, and a correspondence between these two is maintained. After that, the correspondence between an IP address of the UA module and the number of a calling terminal is sent in a form of an ACCOUNTING REQ (START) message to the WAPGW over the RADIUS interface, where the IP address of the UA of the called terminal is set to the IP address of the UA module. In step S202, after recording the correspondence between the IP address of the UA module of the multimedia message platform and the number of the calling terminal, the WAPGW replies an ACCOUNTING_RES response message to notify the RAD_C module of the multimedia message platform of the successful reception. In step S203, after the multimedia platform receives an RADIUS message, the UA module sends the multimedia message to the WAPGW, where the IP address of the UA module needs to be consistent with the IP of the UA of the called terminal indicated in the previous ACCOUNTING_REQ (START) message, and the sender of the multimedia message is set to the called number of a telephone call. In step S204, after receiving a request for sending the multimedia message, the WAPGW inquires the number of the calling terminal according to the IP address of the UA module and fills the number of the calling number into an HTTP request header, and the multimedia message request is sent to an MMSC to which the calling terminal belongs. In step S205, after successfully receiving the multimedia message, the MMSC replies a response of multimedia message submission. In step S206, after receiving the response, the WAPGW replies the response of the multimedia message submission to the multimedia message platform. In step S207, after successfully sending the multimedia message, the multimedia message platform sends an RADIUS message to notify the WAPGW that a user goes offline, and the correspondence between the IP address of the UA module and the number of the calling terminal is released. In step S208, after receiving the RADIUS offline message, the WAPGW deletes the correspondence and replies a success response to the platform.

It is to be noted that in some cases, the multimedia message service process includes generally as follows:
the UA of a user terminal---the GGSN---the WAPGW---the MMSC---the WAPGW---the UA; or
the SP---a multimedia messaging service gateway (MMSG)---the MMSC---the WAPGW---the UA.

According to the multimedia message platform provided by the embodiments of the present disclosure, the multimedia message service process is changed as follows:
the multimedia message platform---the WAPGW---the MMSC---the WAPGW---the UA.

It is to be understood by those of ordinary skill in the art that the embodiments of the present disclosure merely give an example of an application scenario using the multimedia message service; when the application scenario is changed to a short message, VMS voice or other services, the related wireless application protocol gateway (WAPGW) may be replaced with another type of gateways, for example, a WEB Gate-Way (WEBGW), and the corresponding implementation solution is similar to the solution described above.

It is to be understood by those of ordinary skill in the art that the embodiments of the present disclosure merely give a description using an example where the performing body of the message sending method is an independent newly added network element. In a practical application, the modules for implementing the method may be integrated into the WAPGW. However, compared with that in the mode of adding a network element, devices in the network are greatly changed in this case. Therefore, in an embodiment, the mode of adding the network element is used for implementing the corresponding functions.

In an embodiment of the present disclosure, by receiving the number of the calling terminal and the number of the called terminal sent by the mobile switching center (MSC), the number of the called terminal can be acquired, that is, the number of the sender is acquired, thereby achieving the purpose of displaying the number of the called terminal at the receiver. The message sending method of the embodiments of the present disclosure is applicable to not only e-commerce promotion scenarios such as multimedia message replying, but also scenarios such as enterprises, physical stores or individuals, where the message sending method serves as a supplement to current SP services owned by large enterprises and institutions. Especially, the message sending method is applicable to small enterprises or individuals that cannot afford the costs of SP construction.

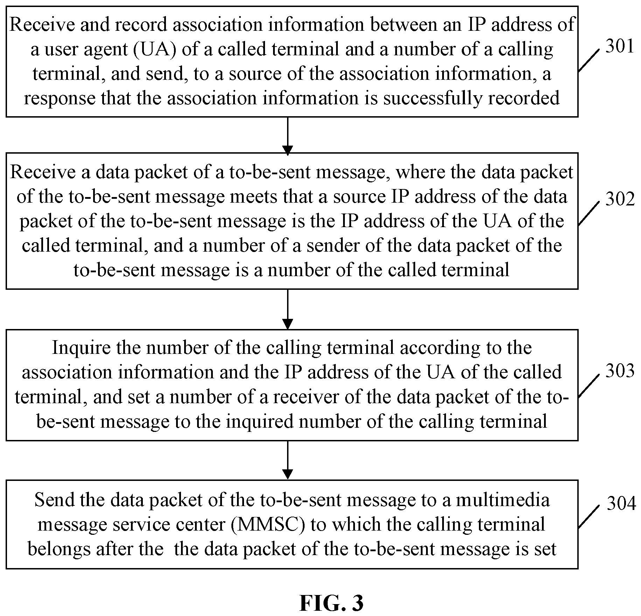

FIG. 3 is a flowchart of a message sending method according to an embodiment of the present disclosure. As shown in FIG. 3, the message sending method includes the steps described below.

In step 301, association information between an IP address of a user agent (UA) of a called terminal and a number of a calling terminal is received and recorded, and a response that the association information is successfully recorded is sent to a source of the association information.

Here, the message sending method is applied to a WAPGW gateway side, which may be understood with reference to the message sending method of the multimedia message platform described above. After the WAPGW receives the association information between the IP address of the user agent (UA) of the called terminal and the number of the calling terminal, where the association information is sent by the RAD_C module of the multimedia message platform, the correspondence is recorded, and a response of the successful reception is replied to the RAD_C module of the multimedia message platform.

In step 302, a data packet of a to-be-sent message is received. The data packet of the to-be-sent message meets that a source IP address of the data packet of the to-be-sent message is the IP address of the UA of the called terminal, and a number of a sender of the data packet of the to-be-sent message is a number of the called terminal.

A multimedia message is received from the UA module of the multimedia message platform. A source address of the multimedia message is the IP address of the UA of the called terminal.

In step 303, the number of the calling terminal is inquired according to the association information and the IP address of the UA of the called terminal, and a number of a receiver of the data packet of the to-be-sent message is set to the inquired number of the calling terminal.

According to the association information recorded in step 301, the WAPGW inquires the number of the calling terminal corresponding to the IP address, and then, the WAPGW fills the number of the calling terminal into an X-UP-CALLING-LINE-ID field in an HTTP packet header of the received data packet of the multimedia message, so as to indicate that the receiver of the multimedia message is the number of the calling terminal.

In step 304, the data packet of the to-be-sent message is sent to a multimedia message service center (MMSC) to which the calling terminal belongs, after the data packet of the to-be-sent message is set.

After the field of the HTTP packet header of the data packet is filled, the WAPGW forwards the data packet to the MMSC to which the calling terminal belongs, and the multimedia message is issued to the calling terminal through the MMSC.

In an embodiment of the present disclosure, when a user offline notification is received, the association information between the IP address of the UA of the called terminal and the number of the calling terminal is deleted. In an embodiment, after the WAPGW receives the offline notification sent by the multimedia message platform, the previously recorded association information is deleted, and a success response is replied to the multimedia message platform after the deletion is completed.

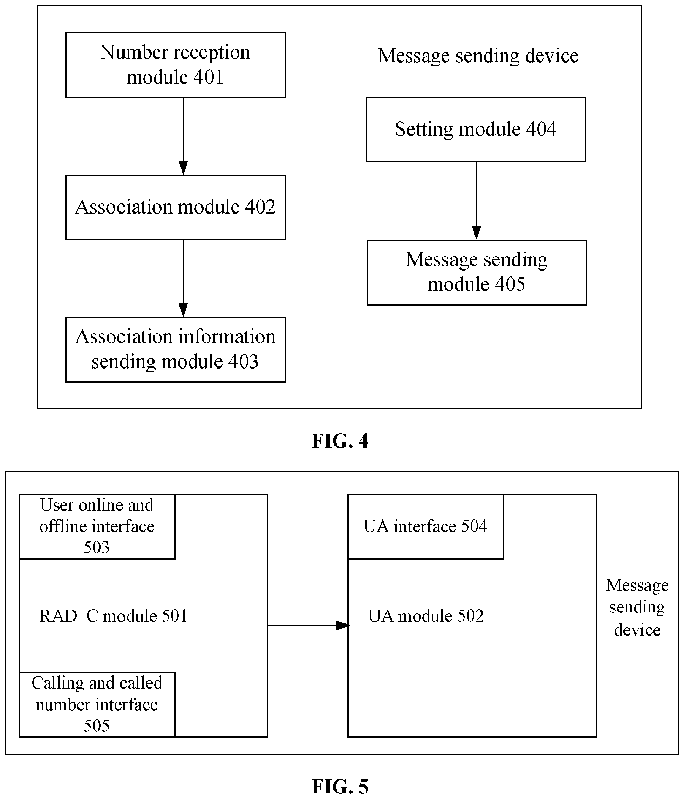

FIG. 4 is a structural diagram of a message sending device according to an embodiment of the present disclosure. As shown in FIG. 4, the message sending device includes a number reception module 401, an association module 402, an association information sending module 403, a setting module 404 and a message sending module 405. The number reception module 401 is configured to receive a number of a calling terminal and a number of a called terminal which are sent by a mobile switching center (MSC). The association module 402 is configured to acquire an IP address of a user agent (UA) of the called terminal, and associate the IP address with the number of the calling terminal to obtain association information. The association information sending module 403 is configured to send the association information to a wireless application protocol gateway (WAPGW). The setting module 404 is configured to, after receiving a response that the WAPGW successfully records the association information, set a source IP address of a data packet of a to-be-sent message to the IP address of the UA of the called terminal, and set a number of a sender of the data packet of the to-be-sent message to the number of the called terminal. The message sending module 405 is configured to send, to the WAPGW, the data packet of the to-be-sent message after the data packet of the to-be-sent message is set.

It is to be understood by those skilled in the art that implementation of functions of various units of the message sending device in FIG. 4 may be understood with reference to the related description of the message sending method described above. The functions of the various modules of the message sending device in FIG. 4 may be implemented by programs running on a processor or by specific logic circuits.

FIG. 5 is a structural diagram of an optional device corresponding to the virtual device illustrated in FIG. 4 in a practical application. As shown in FIG. 5, the device includes an RAD_C module 501, a UA module 502, a user online and offline interface 503, a UA interface 504, and a calling and called number interface 505. The RAD_C module 501 is configured to: simulate the GGSN, request online information about a user from the WAPGW, and acquire a correspondence between an IP allocated for the user and a mobile phone number (mobile station integrated services digital network number (MSISDN)) of the user to send a multimedia message. The UA module 502 is configured to edit and send the multimedia message. A standard RADIUS protocol is used in the message on the user online and offline interface 503, and reference may be made to the ACCOUNTING message of the RADIUS protocol. A standard HTTP request is used on the UA interface 504, where a source address of the request is an IP address for sending the MMS message, a destination address and a port of the request are an address and a port of an M1 interface of the multimedia message center, respectively, and the X-UP-CALLING-LINE-ID field of the HTTP packet header is filled in with the calling number. The calling and called number interface 505 is an interface between the RAD_C module 501 and an MSC network element, in which the UDP protocol is used.

The implementation of specific functions of the modules and interfaces described above is understood with reference to the contents in steps 101 to 105 of the message sending method described above.

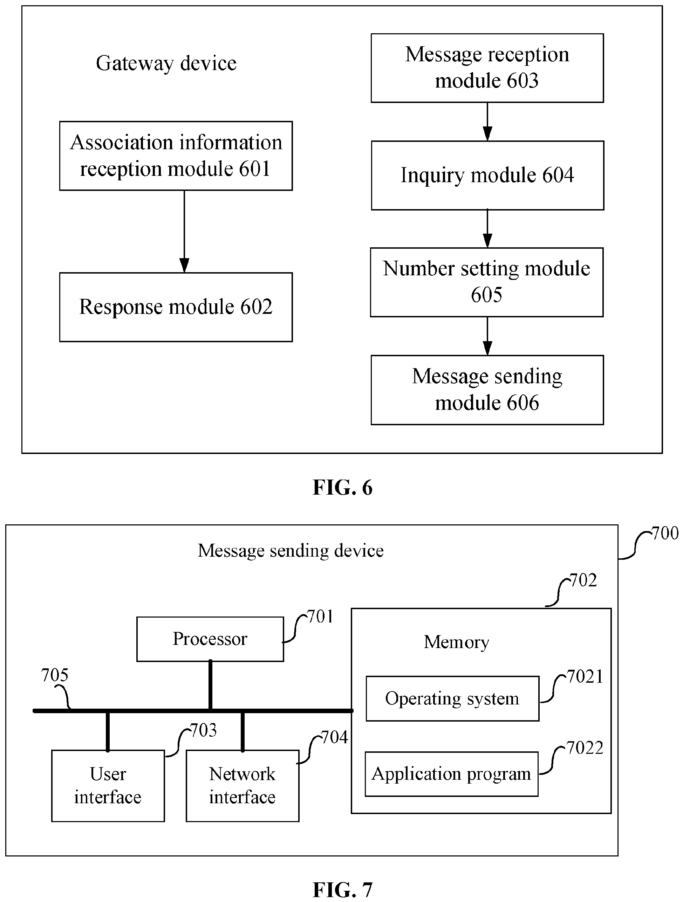

FIG. 6 is a structural diagram of a gateway device according to an embodiment of the present disclosure. As shown in FIG. 6, the gateway device includes an association information reception module 601, a response module 602, a message reception module 603, an inquiry module 604, a number setting module 605 and a message sending module 606.

The association information reception module 601 is configured to receive and record association information between an IP address of a user agent (UA) of a called terminal and a number of a calling terminal. The response module 602 is configured to send, to a source of the association information, a response that the association information is successfully recorded. The message reception module 603 is configured to receive a data packet of a to-be-sent message, where the data packet of the to-be-sent message meets that a source IP address of the data packet of the to-be-sent message is the IP address of the UA of the called terminal, and a number of a sender of the data packet of the to-be-sent message is a number of the called terminal. The inquiry module 604 is configured to inquire the number of the calling terminal according to the association information and the IP address of the UA of the called terminal. The number setting module 605 is configured to set a number of a receiver of the data packet of the to-be-sent message to the inquired number of the calling terminal. The message sending module 606 is configured to send the data packet of the to-be-sent message to a multimedia message service center (MMSC) to which the calling terminal belongs after the data packet of the to-be-sent message is set.

It is to be understood by those skilled in the art that implementation of functions of various units of the gateway device in FIG. 6 may be understood with reference to the related description of the message sending method of the gateway side described above. The functions of various modules in the gateway device in FIG. 6 may be implemented by programs running on a processor or by specific logic circuits.

FIG. 7 is a structural diagram of a message sending device according to an embodiment of the present disclosure. The message sending device 700 shown in FIG. 7 is configured on a terminal. The message sending device 700 includes at least one processor 701, a memory 702, a user interface 703 and at least one network interface 704. Various components in the message sending device 700 are coupled together via a bus system 705. It may be understood that the bus system 705 is configured to implement connections and communications among these components. In addition to a data bus, the bus system 705 further includes a power bus, a control bus and a state signal bus. However, for a clear description, various buses are all marked as the bus system 705 in FIG. 7.

The user interface 703 may include a display, a keyboard, a mouse, a trackball, a click wheel, a key, a button, a touch pad, a touch screen or the like.

In an embodiment of the present disclosure, the memory 702 is configured to store various types of data to support operations of the message sending device 700. Examples of such data include any computer program executed on the message sending device 700, such as an operating system 7021 and an application program 7022. The operating system 7021 includes various system programs, such as a framework layer, a core library layer and a driver layer, and the various system programs are used for implementing various basic services and processing hardware-based tasks. The application program 7022 may include various application programs for implementing various application services. Programs for implementing the method of the embodiments of the present disclosure may be included in the application program 7022.

The methods disclosed by the embodiments of the present disclosure described above may be applied to the processor 701 or may be implemented by the processor 701. The processor 701 may be an integrated circuit chip with a signal processing capability. In the implementation process, various steps of the method described above may be completed by an integrated logic circuit of hardware in the processor 701 or instructions in the form of software. The processor 701 described above may be a general-purpose processor, a digital signal processor, any other programmable logic element, a discrete gate or a transistor logic element, a discrete hardware component or the like. The processor 701 may implement or execute various methods, steps and logic block diagrams disclosed in the embodiments of the present disclosure. The general-purpose processor may be a microprocessor or any conventional processor. The steps in the methods disclosed by embodiments of the present disclosure may be directly implemented by a hardware decoding processor or may be implemented by a combination of hardware and software modules in the decoding processor. The software module may be located in a storage medium in the memory 702. The processor 701 reads information from the memory 702 and implements the steps of the method described above in conjunction with hardware of the processor 701.

It may be understood that the memory 702 may be a volatile memory or a non-volatile memory, or may include both the volatile memory and the non-volatile memory. The non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk or a compact disc read-only memory (CD-ROM). The magnetic surface memory may be a magnetic disk memory or a magnetic tape memory. The volatile memory may be a random-access memory (RAM), which serves as an external cache. By way of an exemplary description rather than a limited description, many forms of RAMs may be used, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a SyncLink dynamic random access memory (SLDRAM) and a direct Rambus random access memory (DRRAM). The memory 702 described in an embodiment of the present disclosure is intended to include, but is not limited to, these memories and any other suitable type of memory.

On the basis of the message sending methods provided by various embodiments of the present disclosure, the present disclosure further provides a computer-readable storage medium. With reference to FIG. 7, the computer-readable storage medium may include a memory 702 for storing a computer program executable by a processor 701 of a message sending device 700 to complete the steps of the method described above. The computer-readable storage medium may be a memory such as an FRAM, a ROM, a PROM, an EPROM, an EEPROM, a Flash Memory, a magnetic surface memory, an optical disk or a CD-ROM.

It is to be noted that if not in collision, the technical solutions described in the embodiments of the present disclosure may be combined.

According to a solution of an embodiment of the present disclosure, a number of a calling terminal and a number of a called terminal which are sent by a mobile switching center (MSC) are received; an IP address of a user agent (UA) of the called terminal is acquired, and the IP address is associated with the number of the calling terminal to obtain association information; a correspondence after the association is sent to a wireless application protocol gateway (WAPGW); after a response that the WAPGW successfully records the association information is received, a source IP address of a data packet of a to-be-sent message is set to the IP address of the UA of the called terminal, and a number of a sender of the data packet of the to-be-sent message is set to the number of the called terminal; and the data packet of the to-be-sent message is sent to the WAPGW after the data packet of the to-be-sent message is set. In this way, the functions of automatically sending the message and displaying the number of the called terminal at the sender are implemented. Additionally, according to a solution of an embodiment of the present disclosure, association information between an IP address of a user agent (UA) of a called terminal and a number of a calling terminal are received and recorded, and a response that the association information is successfully recorded is sent to a source of the association information; a data packet of a to-be-sent message is received, where the data packet of the to-be-sent message meets that a source IP address of the data packet of the to-be-sent message is the IP address of the UA of the called terminal, and a number of a sender of the data packet of the to-be-sent message is a number of the called terminal; the number of the calling terminal is inquired according to the association information and the IP address of the UA of the called terminal, and the inquired number of the calling terminal is set as a number of a receiver of the data packet of the to-be-sent message; and the data packet of the to-be-sent message is sent to a multimedia message service center (MMSC) after the data packet of the to-be-sent message is set. In this way, the functions of automatically sending the message and displaying the number of the called terminal at the sender are implemented on a gateway device, and the number of the calling terminal and the number of the called terminal are matched by using the recorded association information, thereby implementing the function of displaying the number of the called terminal.
disclosure, the present disclosure further provides a computer-readable storage medium. With reference to FIG. 7, the computer-readable storage medium may include a memory 702 for storing a computer program executable by a processor 701 of a message sending device 700 to complete the steps of the method described above. The computer-readable storage medium may be a memory such as an FRAM, a ROM, a PROM, an EPROM, an EEPROM, a Flash Memory, a magnetic surface memory, an optical disk or a CD-ROM.

It is to be noted that if not in collision, the technical solutions described in the embodiments of the present disclosure may be combined.

According to a solution of an embodiment of the present disclosure, a number of a calling terminal and a number of a called terminal which are sent by a mobile switching center (MSC) are received; an IP address of a user agent (UA) of the called terminal is acquired, and the IP address is associated with the number of the calling terminal to obtain association information; a correspondence after the association is sent to a wireless application protocol gateway (WAPGW); after a response that the WAPGW successfully records the association information is received, a source IP address of a data packet of a to-be-sent message is set to the IP address of the UA of the called terminal, and a number of a sender of the data packet of the to-be-sent message is set to the number of the called terminal; and the data packet of the to-be-sent message is sent to the WAPGW after the data packet of the to-be-sent message is set. In this way, the functions of automatically sending the message and displaying the number of the called terminal at the sender are implemented. Additionally, according to a solution of an embodiment of the present disclosure, association information between an IP address of a user agent (UA) of a called terminal and a number of a calling terminal are received and recorded, and a response that the association information is successfully recorded is sent to a source of the association information; a data packet of a to-be-sent message is received, where the data packet of the to-be-sent message meets that a source IP address of the data packet of the to-be-sent message is the IP address of the UA of the called terminal, and a number of a sender of the data packet of the to-be-sent message is a number of the called terminal; the number of the calling terminal is inquired according to the association information and the IP address of the UA of the called terminal, and the inquired number of the calling terminal is set as a number of a receiver of the data packet of the to-be-sent message; and the data packet of the to-be-sent message is sent to a multimedia message service center (MMSC) after the data packet of the to-be-sent message is set. In this way, the functions of automatically sending the message and displaying the number of the called terminal at the sender are implemented on a gateway device, and the number of the calling terminal and the number of the called terminal are matched by using the recorded association information, thereby implementing the function of displaying the number of the called terminal.

The above are merely preferred embodiments of the present disclosure and are not intended to limit the scope of the present disclosure. The present invention is only defined by the appended claims.

## Claims

1. A message sending method, applied to a multimedia message platform, comprising:
receiving (101) a number of a calling terminal and a number of a called terminal which are pushed by a mobile switching center, MSC after the called terminal completes a call and hangs up;
wherein the calling terminal belongs to a multimedia message service center, MMSC;
acquiring (102) an Internet protocol, IP, address of a user agent, UA, of the called terminal, and associating the IP address with the number of the calling terminal to obtain association information;
**characterized in that**, the method further comprises:
sending (103) the association information to a wireless application protocol gateway, WAPGW;
after receiving a response that the WAPGW successfully recorded the association information, setting (104) a source IP address of a data packet of a to-be-sent message to the IP address of the UA of the called terminal, and setting a number of a sender of the data packet of the to-be-sent message to the number of the called terminal; wherein the to-be-sent message is a multimedia message and is edited by the multimedia message platform; and
sending (105) the data packet of the to-be-sent message to the WAPGW after encapsulating the edited to-be-sent message in the data packet.

2. The method of claim 1, further comprising:
after receiving a response that the data packet of the to-be-sent message is successfully submitted, notifying the WAPGW to delete correspondence information between the IP address of the UA of the called terminal and the number of the calling terminal; wherein the response is sent by the WAPGW after the WAPGW receives the response from the MMSC.

3. A message sending method, applied to a wireless application protocol gateway, WAPGW, **characterized by** comprising:
receiving, from a multimedia message platform, and recording (301) association information between an Internet protocol, IP, address of a user agent, UA, of a called terminal and a number of a calling terminal, and sending, to he multimedia message platform, a response that the association information is successfully recorded;
receiving (302), from the multimedia message platform, a data packet of a to-be-sent message, wherein the data packet of the to-be-sent message meets that a source IP address of the data packet of the to-be-sent message is the IP address of the UA of the called terminal, and a number of a sender of the data packet of the to-be-sent message is a number of the called terminal; wherein the to-be-sent message is a multimedia message and is edited by the multimedia message platform;
inquiring (303) the number of the calling terminal according to the association information and the IP address of the UA of the called terminal, and setting a number of a receiver of the data packet of the to-be-sent message to the inquired number of the calling terminal; and
sending (304) the data packet of the to-be-sent message to a multimedia message service center, MMSC, to which the calling terminal belongs after the number of the receiver of the data packet of the to-be-sent message is set.

4. The message sending method of claim 3, further comprising:
in a case of receiving a user offline notification, deleting the association information between the IP address of the UA of the called terminal and the number of the calling terminal.

5. A multimedia message platform comprising:
a number reception module (401), which is configured to receive a number of a calling terminal and a number of a called terminal which are pushed by a mobile switching center, MSC after the called terminal completes a call and hangs up; wherein the calling terminal belongs to a multimedia message service center, MMSC;
an association module (402), which is configured to acquire an Internet protocol, IP, address of a user agent, UA, of the called terminal, and associate the IP address with the number of the calling terminal to obtain association information;
**characterized in that**, the multimedia message platform further comprises:
an association information sending module (403), which is configured to send the association information to a wireless application protocol gateway, WAPGW;
a setting module (404), which is configured to, after receiving a response that the WAPGW successfully recorded the association information, set a source IP address of a data packet of a to-be-sent message to the IP address of the UA of the called terminal, and set a number of a sender of the data packet of the to-be-sent message to the number of the called terminal; wherein the to-be-sent message is a multimedia message and is edited by the multimedia message platform; and
a message sending module (405), which is configured to send the data packet of the to-be-sent message to the WAPGW after encapsulating the edited to-be-sent message in the data packet.

6. The message sending device of claim 5, further comprising:
a notification module, which is configured to, after receiving a response that the data packet of the to-be-sent message is successfully submitted, notify the WAPGW to delete correspondence information between the IP address of the UA of the called terminal and the number of the calling terminal, wherein the response is sent by the WAPGW and from a multimedia message service center, MMSC.

7. A wireless application protocol gateway, WAPGW, device, **characterized by** comprising:
an association information reception module (601), which is configured to receive from a multimedia message platform and record association information between an Internet protocol, IP, address of a user agent, UA, of a called terminal and a number of a calling terminal;
a response module (602), which is configured to send, to the multimedia message platform, a response that the association information is successfully recorded;
a message reception module (603), which is configured to receive a data packet of a to-be-sent message from a multimedia message platform,
wherein the data packet of the to-be-sent message meets that a source IP address of the data packet of the to-be-sent message is the IP address of the UA of the called terminal, and a number of a sender of the data packet of the to-be-sent message is a number of the called terminal;
wherein the to-be-sent message is a multimedia message and is edited by the multimedia message platform;
an inquiry module (604), which is configured to inquire the number of the calling terminal according to the association information and the IP address of the UA of the called terminal;
a number setting module (605), which is configured to set a number of a receiver of the data packet of the to-be-sent message to the inquired number of the calling terminal; and
a message sending module (606), which is configured to send the data packet of the to-be-sent message to a multimedia message service center, MMSC, to which the calling terminal belongs after the number of the receiver of the data packet of the to-be-sent message is set

8. The gateway device of claim 7, further comprising:
a deletion module, which is configured to, in a case of receiving a user offline notification, delete the association information between the IP address of the UA of the called terminal and the number of the calling terminal.

9. A computer-readable storage medium, storing a computer program, wherein the computer program, when executed by a processor, implements steps of the message sending method of any one of claims 1-4.

## Patentansprüche

1. Verfahren zum Senden von Nachrichten, angewendet auf einer Multimedianachrichtenplattform, umfassend:
Empfangen (101) einer Nummer eines anrufenden Endgerätes und einer Nummer eines angerufenen Endgerätes, die von einer mobilen Vermittlungszentrale, MSC, gepusht werden, nachdem das angerufene Endgerät einen Anruf beendet und aufgelegt hat; wobei das anrufende Endgerät zu einem Multimedia Message Service Center, MMSC, gehört;
Erfassen (102) einer Internetprotokoll-Adresse, IP-Adresse, eines Benutzeragenten, UA, des angerufenen Endgeräts und Zuordnen der IP-Adresse zu der Nummer des anrufenden Endgerätes, um Zuordnungsinformationen zu erhalten;
**dadurch gekennzeichnet, dass** das Verfahren ferner umfasst:
Senden (103) der Zuordnungsinformationen an ein drahtloses Anwendungsprotokoll-Gateway, WAPGW;
nach dem Empfangen einer Antwort, dass das WAPGW die Zuordnungsinformationen erfolgreich aufgezeichnet hat,
Setzen (104) einer Quell-IP-Adresse eines Datenpakets einer zu sendenden Nachricht auf die IP-Adresse des UA des angerufenen Endgerätes, und Setzen einer Nummer eines Senders des Datenpakets der zu sendenden Nachricht auf die Nummer des angerufenen Endgerätes; wobei die zu sendende Nachricht eine Multimedianachricht ist und von der Multimedianachrichtenplattform bearbeitet wird; und
Senden (105) des Datenpakets der zu sendenden Nachricht an das WAPGW, nachdem die bearbeitete zu sendende Nachricht in das Datenpaket eingekapselt wurde.

2. Verfahren nach Anspruch 1, ferner umfassend:
nach dem Empfangen einer Antwort, dass das Datenpaket der zu sendenden Nachricht erfolgreich übermittelt wurde, Benachrichtigen des WAPGW, um Korrespondenzinformationen zwischen der IP-Adresse des UA des angerufenen Endgerätes und der Nummer des anrufenden Endgerätes zu löschen; wobei die Antwort von dem WAPGW gesendet wird, nachdem das WAPGW die Antwort von dem MMSC empfangen hat.

3. Verfahren zum Senden von Nachrichten, angewandt auf ein drahtloses Anwendungsprotokoll-Gateway, WAPGW, **dadurch gekennzeichnet, dass** es Folgendes umfasst:
Empfangen von einer Multimedianachrichtenplattform und Aufzeichnen (301) von Zuordnungsinformationen zwischen einer Internetprotokoll-Adresse, IP-Adresse, eines Benutzeragenten, UA, eines angerufenen Endgerätes und einer Nummer eines anrufenden Endgerätes, und Senden einer Antwort an die Multimedianachrichtenplattform, dass die Zuordnungsinformationen erfolgreich aufgezeichnet wurden;
Empfangen (302) eines Datenpakets einer zu sendenden Nachricht von der Multimedianachrichtenplattform, wobei das Datenpaket der zu sendenden Nachricht erfüllt, dass eine Quell-IP-Adresse des Datenpakets der zu sendenden Nachricht die IP-Adresse des UA des anrufenden Endgerätes ist, und eine Nummer eines Senders des Datenpakets der zu sendenden Nachricht eine Nummer des anrufenden Endgerätes ist; wobei die zu sendende Nachricht eine Multimedianachricht ist und von der Multimedianachrichtenplattform bearbeitet wird;
Abfragen (303) der Nummer des anrufenden Endgerätes gemäß der Zuordnungsinformationen und der IP-Adresse des UA des angerufenen Endgerätes, und Setzen einer Nummer eines Empfängers des Datenpakets der zu sendenden Nachricht auf die abgefragte Nummer des anrufenden Endgerätes; und
Senden (304) des Datenpakets der zu sendenden Nachricht an ein Multimedia Message Service Center, MMSC, zu dem das anrufende Endgerät gehört, nachdem die Nummer des Empfängers des Datenpakets der zu sendenden Nachricht gesetzt ist.

4. Verfahren zum Senden von Nachrichten nach Anspruch 3, ferner umfassend:
in einem Fall des Empfangens einer Benutzer-Offline-Benachrichtigung, Löschen der Zuordnungsinformationen zwischen der IP-Adresse des UA des anrufenden Endgerätes und der Nummer des anrufenden Endgerätes.

5. Multimedianachrichtenplattform, umfassend:
ein Nummernempfangsmodul (401), das dazu konfiguriert ist, eine Nummer eines anrufenden Endgerätes und eine Nummer eines angerufenen Endgerätes zu empfangen, die von einer mobilen Vermittlungszentrale, MSC, gepusht werden, nachdem das angerufene Endgerät einen Anruf beendet und aufgelegt hat; wobei das anrufende Endgerät zu einem Multimedia Message Service Center, MMSC, gehört;
ein Zuordnungsmodul (402), das dazu konfiguriert ist, eine Internetprotokoll-Adresse, IP-Adresse, eines Benutzeragenten, UA, des angerufenen Endgerätes zu erfassen und die IP-Adresse der Nummer des anrufenden Endgerätes zuzuordnen, um Zuordnungsinformationen zu erhalten;
**dadurch gekennzeichnet, dass** die Multimedianachrichtenplattform ferner umfasst:
ein Zuordnungsinformations-Sendemodul (403), das dazu konfiguriert ist, die Zuordnungsinformationen an ein drahtloses Anwendungsprotokoll-Gateway, WAPGW, zu senden;
ein Setzmodul (404), das dazu konfiguriert ist, nach dem Empfangen einer Antwort, dass das WAPGW die Zuordnungsinformationen erfolgreich aufgezeichnet hat, eine Quell-IP-Adresse eines Datenpakets einer zu sendenden Nachricht auf die IP-Adresse des UA des angerufenen Endgerätes zu setzen, und eine Nummer eines Senders des Datenpaketes der zu sendenden Nachricht auf die Nummer des angerufenen Endgerätes zu setzen;
wobei die zu sendende Nachricht eine Multimedianachricht ist und von der Multimedianachrichtenplattform bearbeitet wird; und
ein Nachrichtensendemodul (405), das dazu konfiguriert ist, das Datenpaket der zu sendenden Nachricht an das WAPGW zu senden, nachdem die bearbeitete zu sendende Nachricht in das Datenpaket eingekapselt wurde.

6. Vorrichtung zum Senden von Nachrichten nach Anspruch 5, ferner umfassend:
ein Benachrichtigungsmodul, das dazu konfiguriert ist, nach dem Empfangen einer Antwort, dass das Datenpaket der zu sendenden Nachricht erfolgreich übermittelt wurde, das WAPGW zu benachrichtigen, um Korrespondenzinformationen zwischen der IP-Adresse des UA des angerufenen Endgerätes und der Nummer des anrufenden Endgerätes zu löschen, wobei die Antwort von dem WAPGW und von einem Multimedia Message Service Center, MMSC, gesendet wird.

7. Drahtlose Anwendungsprotokoll-Gateway-Vorrichtung, WAPGW-Vorrichtung, **dadurch gekennzeichnet, dass** sie Folgendes umfasst:
ein Zuordnungsinformations-Empfangsmodul (601), das dazu konfiguriert ist, von einer Multimedianachrichtenplattform Zuordnungsinformationen zwischen einer Internetprotokoll-Adresse, IP-Adresse, eines Benutzeragenten, UA, eines angerufenen Endgerätes und einer Nummer eines anrufenden Endgerätes zu empfangen und aufzuzeichnen;
ein Antwortmodul (602), das dazu konfiguriert ist, Folgendes an die Multimedianachrichtenplattform zu senden,
eine Antwort, dass die Zuordnungsinformationen erfolgreich aufgezeichnet wurde;
ein Nachrichtenempfangsmodul (603), das dazu konfiguriert ist,
ein Datenpaket einer zu sendenden Nachricht von einer Multimedianachrichtenplattform zu empfangen,
wobei das Datenpaket der zu sendenden Nachricht erfüllt, dass eine Quell-IP-Adresse des Datenpakets der zu sendenden Nachricht die IP-Adresse des UA des angerufenen Endgerätes ist, und eine Nummer eines Senders des Datenpakets der zu sendenden Nachricht eine Nummer des angerufenen Endgerätes ist;
wobei die zu sendende Nachricht eine Multimedianachricht ist und von der Multimedianachrichtenplattform bearbeitet wird;
ein Abfragemodul (604), das dazu konfiguriert ist, die Nummer des anrufenden Endgerätes gemäß der Zuordnungsinformationen und der IP-Adresse des UA des angerufenen Endgerätes abzufragen;
ein Nummernsetzmodul (605), das dazu konfiguriert ist, eine Nummer eines Empfängers des Datenpakets der zu sendenden Nachricht auf die abgefragte Nummer des anrufenden Endgerätes zu setzen; und
ein Nachrichtensendemodul (606), das dazu konfiguriert ist, das Datenpaket der zu sendenden Nachricht an ein Multimedia Message Service Center, MMSC, zu dem das anrufende Endgerät gehört zu senden, nachdem die Nummer des Empfängers des Datenpakets der zu sendenden Nachricht gesetzt ist.

8. Gateway-Vorrichtung nach Anspruch 7, ferner umfassend:
ein Löschmodul, das dazu konfiguriert ist, in einem Fall des Empfangens einer Benutzer-Offline-Benachrichtigung, die Zuordnungsinformationen zwischen der IP-Adresse des UA des anrufenden Endgerätes und der Nummer des anrufenden Endgerätes zu löschen.

9. Computerlesbares Speichermedium, das ein Computerprogramm speichert, wobei das Computerprogramm, wenn es von einem Prozessor ausgeführt wird, Schritte des Verfahrens zum Senden von Nachrichten nach einem der Ansprüche 1-4 implementiert.

## Revendications

1. Procédé d'envoi de messages, appliqué à une plateforme de messagerie multimédia, comprenant :
la réception (101) d'un numéro d'un terminal appelant et d'un numéro d'un terminal appelé qui sont transmis par un centre de commutation mobile, MSC après que le terminal appelé a effectué un appel et raccroché ; dans lequel le terminal appelant appartient à un centre de service de messagerie multimédia, MMSC ;
l'acquisition (102) d'une adresse de protocole Internet, IP, d'un agent utilisateur, UA, du terminal appelé, et l'association de l'adresse IP au numéro du terminal appelant pour obtenir des informations d'association ;
**caractérisé en ce que**, le procédé comprend en outre :
l'envoi (103) des informations d'association à une passerelle de protocole d'application sans fil, WAPGW ;
après la réception d'une réponse selon laquelle la WAPGW a enregistré avec succès les informations d'association,
la définition (104) d'une adresse IP source d'un paquet de données d'un message à envoyer à l'adresse IP de l'UA du terminal appelé, et la définition d'un numéro d'un expéditeur du paquet de données du message à envoyer au numéro du terminal appelé ;
dans lequel le message à envoyer est un message multimédia et est édité par la plateforme de messagerie multimédia ; et
l'envoi (105) du paquet de données du message à envoyer à la WAPGW après encapsulation du message à envoyer édité dans le paquet de données.

2. Procédé selon la revendication 1, comprenant en outre :
après réception d'une réponse indiquant que le paquet de données du message à envoyer a été soumis avec succès, la notification à la WAPGW de supprimer des informations de correspondance entre l'adresse IP de l'UA du terminal appelé et le numéro du terminal appelant ; dans lequel la réponse est envoyée par la WAPGW après que la WAPGW a reçu la réponse du MMSC.

3. Procédé d'envoi de messages, appliqué à une passerelle de protocole d'application sans fil, WAPGW, **caractérisé en ce qu'**il comprend :
la réception, en provenance d'une plateforme de messagerie multimédia, et l'enregistrement (301) d'informations d'association entre une adresse de protocole Internet, IP, d'un agent utilisateur, UA, d'un terminal appelé et d'un numéro d'un terminal appelant, et l'envoi, à la plateforme de messagerie multimédia, d'une réponse selon laquelle les informations d'association ont été enregistrées avec succès ;
la réception (302), en provenance de la plateforme de messagerie multimédia, d'un paquet de données d'un message à envoyer, dans lequel le paquet de données du message à envoyer répond à la condition selon laquelle une adresse IP source du paquet de données du message à envoyer est l'adresse IP de l'UA du terminal appelé, et un numéro d'un expéditeur du paquet de données du message à envoyer est un numéro du terminal appelé ; dans lequel le message à envoyer est un message multimédia et est édité par la plateforme de messagerie multimédia ;
l'interrogation (303) du numéro du terminal appelant en fonction des informations d'association et de l'adresse IP de l'UA du terminal appelé, et la définition d'un numéro d'un récepteur du paquet de données du message à envoyer au numéro demandé du terminal appelant ; et
l'envoi (304) du paquet de données du message à envoyer à un centre de service de messagerie multimédia, MMSC, auquel le terminal appelant appartient après que le numéro du récepteur du paquet de données du message à envoyer est défini.

4. Procédé d'envoi de message selon la revendication 3, comprenant en outre :
en cas de réception d'une notification hors ligne d'un utilisateur, la suppression des informations d'association entre l'adresse IP de l'UA du terminal appelé et le numéro du terminal appelant.

5. Plateforme de messagerie multimédia comprenant :
un module de réception de numéro (401), qui est configuré pour recevoir un numéro d'un terminal appelant et un numéro d'un terminal appelé qui sont transmis par un centre de commutation mobile, MSC après que le terminal appelé a effectué un appel et raccroché ; dans lequel le terminal appelant appartient à un centre de service de messagerie multimédia, MMSC ;
un module d'association (402), qui est configuré pour acquérir une adresse de protocole Internet, IP, d'un agent utilisateur, UA, du terminal appelé, et associer l'adresse IP au numéro du terminal appelant pour obtenir des informations d'association ;
**caractérisée en ce que**, la plateforme de messagerie multimédia comprend en outre :
un module d'envoi d'informations d'association (403), qui est configuré pour envoyer les informations d'association à une passerelle de protocole d'application sans fil, WAPGW ;
un module de définition (404), qui est configuré pour, après réception d'une réponse selon laquelle la WAPGW a enregistré avec succès les informations d'association, définir une adresse IP source d'un paquet de données d'un message à envoyer à l'adresse IP de l'UA du terminal appelé, et définir un numéro d'un expéditeur du paquet de données du message à envoyer au numéro du terminal appelé ; dans lequel le message à envoyer est un message multimédia et est édité par la plateforme de messagerie multimédia ; et
un module d'envoi de message (405), qui est configuré pour envoyer le paquet de données du message à envoyer à la WAPGW après encapsulation du message à envoyer édité dans le paquet de données.

6. Dispositif d'envoi de messages selon la revendication 5, comprenant en outre :
un module de notification, qui est configuré pour, après réception d'une réponse indiquant que le paquet de données du message à envoyer a été soumis avec succès, notifier à la WAPGW de supprimer des informations de correspondance entre l'adresse IP de l'UA du terminal appelé et le numéro du terminal appelant, dans lequel la réponse est envoyée par la WAPGW et à partir d'un centre de service de messagerie multimédia, MMSC.

7. Dispositif de passerelle de protocole d'application sans fil, WAPGW, **caractérisé en ce qu'**il comprend :
un module de réception d'informations d'association (601), qui est configuré pour recevoir en provenance d'une plateforme de messagerie multimédia et enregistrer des informations d'association entre une adresse de protocole Internet, IP, d'un agent utilisateur, UA, d'un terminal appelé et un numéro d'un terminal appelant ;
un module de réponse (602), qui est configuré pour envoyer, à la plateforme de messagerie multimédia,
une réponse indiquant que les informations d'association ont été enregistrées avec succès ;
un module de réception de messages (603), qui est configuré pour recevoir un paquet de données d'un message à envoyer en provenance d'une plateforme de messagerie multimédia,
dans lequel le paquet de données du message à envoyer répond à la condition selon laquelle une adresse IP source du paquet de données du message à envoyer est l'adresse IP de l'UA du terminal appelé, et un numéro d'un expéditeur du paquet de données du message à envoyer est un numéro du terminal appelé ;
dans lequel le message à envoyer est un message multimédia et est édité par la plateforme de messagerie multimédia ;
un module d'interrogation (604), qui est configuré pour interroger le numéro du terminal appelant en fonction des informations d'association et de l'adresse IP de l'UA du terminal appelé ;
un module de définition de numéro (605), qui est configuré pour définir un numéro d'un récepteur du paquet de données du message à envoyer au numéro demandé du terminal appelant ; et
un module d'envoi de message (606), qui est configuré pour envoyer le paquet de données du message à envoyer à un centre de service de messagerie multimédia, MMSC, auquel le terminal appelant appartient après que le numéro du récepteur du paquet de données du message à envoyer est défini.

8. Dispositif de passerelle selon la revendication 7, comprenant en outre :
un module de suppression, qui est configuré pour, en cas de réception d'une notification hors ligne d'un utilisateur, supprimer des informations d'association entre l'adresse IP de l'UA du terminal appelé et le numéro du terminal appelant.

9. Support de stockage lisible par ordinateur, stockant un programme informatique, dans lequel le programme informatique, lorsqu'il est exécuté par un processeur, met en œuvre les étapes du procédé d'envoi de message selon l'une quelconque des revendications 1 à 4.
